# EUROPEAN PATENT APPLICATION

(11) **EP 4 488 324 A1**
(43) Date of publication of application: **08.01.2025**
(21) Application number: 23760231.3
(22) Date of filing: 28.02.2023
(51) Int. Cl.: C08L 9/00, B60C 1/00, B62D 55/24, C08K 3/04, C08K 3/16, C08K 3/22, C08K 3/36, C08K 5/098, C08K 5/14, C08K 5/34, C08K 5/3477, C08L 15/00, F16F 15/08

(54) **RUBBER COMPOSITION AND RUBBER PRODUCT**

(30) Priority: 28.02.2022 JP 2022030477
(71) Applicant: BRIDGESTONE CORPORATION, Chuo-ku Tokyo 104-8340 (JP)
(72) Inventor: YUKIMURA, Noriaki, Tokyo 104-8340 (JP); KOTANI, Kyohei, Tokyo 104-8340 (JP); IWASAKI, Shinta, Tokyo 104-8340 (JP)
(74) Representative: Marks & Clerk LLP
(86) International application number: PCT/JP2023/007430
(87) International publication number: WO 2023/163233

(57) **Abstract**

The problem to be solved by the present disclosure is to provide a rubber composition that achieves both thermal degradation resistance and breaking resistance. The solution is a rubber composition including a diene-based rubber (A), a heterocyclic compound (B) having a six-membered aromatic heterocyclic ring, a metal salt (C) (excluding metal oxides, metal carbonate salts, and metal salts of fatty acids with 10 or more carbon atoms), an organic peroxide (D), and a carbon black (E). The mass ratio (D/C) of the organic peroxide (D) to the metal salt (C) is preferably 0.1 to 10.

## Description

### TECHNICAL FIELD

The present disclosure relates to a rubber composition and a rubber product.

### BACKGROUND

Rubber compositions that are excellent in breaking resistance (strength) are generally used in rubber products such as tires, rubber crawlers, and seismic isolation rubber. Such rubber compositions typically contain a diene-based rubber and sulfur, wherein the sulfur crosslinks the diene-based rubber to ensure breaking resistance (strength). Here, sulfur crosslinking forms monosulfide bonds (-S-), disulfide bonds (-S-S-), and polysulfide bonds (-S-Sₓ-S-, where x is 1 or more) between the diene-based rubber, which generally results in high strength. However, among sulfur crosslinks, polysulfide bonds have low bond dissociation energy. Thus, when a diene-based rubber is crosslinked with sulfur, heat can cause the polysulfide bonds to cleave and the crosslink network density is increased during the process of reforming, which hardens the rubber and decreases the tensile strength, elongation, and other characteristics.

To address this issue, a technique is known that uses organic peroxides instead of sulfur as crosslinking agents (refer to PTL 1). When an organic peroxide is used as a crosslinking agent, the organic peroxide forms crosslinking between the diene-based rubber through -C-C- bonds or other bonds. Since the -C-C- bonds have high bond dissociation energy, they are resistant to cleavage even when heated, providing high thermal degradation resistance.

### CITATION LIST

### Patent Literature

PTL 1: JP 2011-225717 A

### SUMMARY

### (Technical Problem)

However, while crosslinking formed by organic peroxides provides excellent thermal degradation resistance, the breaking resistance (strength) is lower compared to sulfur crosslinking and there is room for improvement in breaking resistance.

Accordingly, an object of the present disclosure is to solve the problem of the above conventional technique and to provide a rubber composition that achieves both thermal degradation resistance and breaking resistance.

In addition, another object of the present disclosure is to provide a rubber product that achieves both thermal degradation resistance and breaking resistance.

### (Solution to Problem)

The summary of a rubber composition and a rubber product of the present disclosure that solves the above problem is as follows.
[1] A rubber composition comprising:
   a diene-based rubber (A);
   a heterocyclic compound (B) having a six-membered aromatic heterocyclic ring;
   a metal salt (C) (excluding metal oxides, metal carbonate salts, and metal salts of fatty acids with 10 or more carbon atoms);
   an organic peroxide (D); and
   a carbon black (E).
[2] The rubber composition according to [1], wherein a mass ratio (D/C) of the organic peroxide (D) to the metal salt (C) is 0.1 to 10.
[3] The rubber composition according to [1] or [2], wherein the heterocyclic compound (B) has at least one heterocyclic ring selected from the group consisting of pyridine, pyrimidine, pyridazine, pyrazine, triazine, and tetrazine rings.
[4] The rubber composition according to [3], wherein the heterocyclic compound (B) has a triazine ring or a tetrazine ring.
[5] The rubber composition according to [4], wherein
   the heterocyclic compound (B) is represented by the following general formula (1): 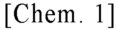 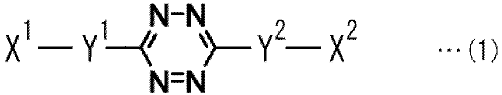 in the formula, X¹ and X² are each independently a pyridyl group or a pyrimidinyl group, and Y¹ and Y² are each independently a single bond or a divalent hydrocarbon group.
[6] The rubber composition according to any one of [1] to [5], wherein the metal salt (C) comprises at least one metal selected from the group consisting of transition metals and zinc.
[7] The rubber composition according to any one of [1] to [6], wherein the metal salt (C) is at least one selected from the group consisting of metal halide salts, metal acrylates, and metal methacrylates.
[8] The rubber composition according to any one of [1] to [7], further comprising a zinc oxide (F).
[9] The rubber composition according to any one of [1] to [8], further comprising a silica (G).
[10] The rubber composition according to any one of [1] to [9], wherein the diene-based rubber (A) is modified with the heterocyclic compound (B).
[11] The rubber composition according to any one of [1] to [10], wherein the diene-based rubber (A) has a weight average molecular weight (Mw) of 10,000 to 3,000,000.
[12] The rubber composition according to any one of [1] to [11], wherein a bond dissociation energy between the metal salt (C) and the heterocyclic compound (B) is 100 kJ/mol or more.
[13] A rubber product selected from the group consisting of a tire, a rubber crawler, and a seismic isolation rubber, comprising
   the rubber composition according to any one of [1] to [12].

### (Advantageous Effect)

According to the present disclosure, it is possible to provide a rubber composition that achieves both thermal degradation resistance and breaking resistance.

In addition, according to the present disclosure, it is possible to provide a rubber product that achieves both thermal degradation resistance and breaking resistance.

### DETAILED DESCRIPTION

A rubber composition and a rubber product of the present disclosure are described below in detail with reference to embodiments thereof.

### <Rubber Composition>

A rubber composition of the present disclosure contains a diene-based rubber (A), a heterocyclic compound (B) having a six-membered aromatic heterocyclic ring, a metal salt (C) (excluding metal oxides, metal carbonate salts, and metal salts of fatty acids with 10 or more carbon atoms), an organic peroxide (D), and a carbon black (E).

In the rubber composition of the present disclosure, the heterocyclic compound (B) is added to the main chains of the diene-based rubber (A). Additionally, the metal salt (C) coordinatively bonds to a heterocyclic compound (B) portion added to a main chain of the diene-based rubber (A), forming complexes. The metal salt (C) forms multiple coordination bonds, resulting in crosslinking of the diene-based rubber (A) in the plural. In addition, since the rubber composition of the present disclosure contains the organic peroxide (D) together with the metal salt (C), the rubber composition after crosslinking will have crosslinking through coordination bonds by the metal salt (C) and crosslinked structures (such as C-C bonds) due to the organic peroxide (D) (dual cross linking: DCL). Here, the crosslinked structures (such as C-C bonds) due to the organic peroxide (D) are resistant to cleavage even when heated and undergo minimal morphological changes due to heat. On the other hand, the crosslinking via coordination bonds is a reversible crosslinking in which bonding (crosslinking) and dissociations (cleavages) are reversible.

The rubber composition of the present disclosure can improve the thermal degradation resistance through the crosslinked structures (such as C-C bonds) due to the organic peroxide (D). On the other hand, under a strain (particularly, in the high-strain region), the crosslinking through coordination bonds in the rubber composition of the present disclosure cleaves, resulting in increased hysteresis loss. Additionally, the energy dissipation due to the cleavage of the crosslinking (i.e., sacrificial breaking of crosslinking through coordination bonds) enhances the breaking resistance, thus achieving a breaking resistance (strength) comparable to or better than conventional sulfur crosslinking. Additionally, the inclusion of carbon black (E) in the rubber composition of the present disclosure further enhances the breaking resistance.

Accordingly, the rubber composition of the present disclosure can achieve both thermal degradation resistance and breaking resistance to a high degree, which cannot be accomplished by conventional sulfur-only crosslinking or by crosslinked structures due to solely organic peroxides.

### --Diene-based Rubber (A)--

The rubber composition of the present disclosure contains a diene-based rubber (A). The inclusion of the diene-based rubber (A) in the rubber composition, together with the heterocyclic compound (B) and the metal salt (C), enables the formation of crosslinked structures.

The diene-based rubber (A) is a rubber containing units derived from a diene-based monomer (diene units) and may further contain units derived from a copolymerizable comonomer.

The units derived from the diene-based monomer described above enable crosslinking (vulcanization) of the diene-based rubber and also enable the provision of rubber-like elongation and strength. In the crosslinked rubber, although the diene-based rubber is usually present in a crosslinked state, a part of the diene-based rubber may not be crosslinked. Specifically, examples of the diene-based monomer (diene-based compound) include 1,3-butadiene, isoprene, 1,3-pentadiene, and 2,3-dimethyl-1,3-butadiene.

On the other hand, examples of the copolymerizable comonomer include aromatic vinyl compounds and the like. Specifically, examples of the aromatic vinyl compounds include styrene, o-methylstyrene, m-methylstyrene, p-methylstyrene, o,p-dimethylstyrene, o-ethylstyrene, methylstyrene, and p-ethylstyrene.

In addition, examples of the diene-based rubber (A) include natural rubber (NR), synthetic isoprene rubber (IR), styrene-butadiene rubber (SBR), butadiene rubber (BR), and chloroprene rubber (CR). These diene-based rubbers (A) may be used alone or as a blend of two or more kinds.

In the rubber composition of the present disclosure, the diene-based rubber (A) preferably has a weight average molecular weight (Mw) of 10,000 to 3,000,000. When the weight average molecular weight (Mw) of the diene-based rubber (A) is 10,000 or more, the breaking resistance of the rubber composition is improved, and when Mw is 3,000,000 or less, workability in kneading of the rubber composition is improved. The weight average molecular weight (Mw) of the diene-based rubber (A) is more preferably 100,000 or more, even more preferably 120,000 or more in view of the breaking resistance of the rubber composition, and is more preferably 2,000,000 or less, even more preferably 1,800,000 or less in view of workability in kneading of the rubber composition.

In this specification, the weight average molecular weight (Mw) of the diene-based rubber (A) is determined by gel permeation chromatography (GPC) using polystyrene as a standard substance.

### --Heterocyclic Compound (B)--

The rubber composition of the present disclosure contains a heterocyclic compound (B) having a six-membered aromatic heterocyclic ring. The six-membered aromatic heterocyclic ring contains a heteroatom(s) in the ring and can form a coordination bond with the metal salt (C). In addition, the heterocyclic compound (B) having a six-membered aromatic heterocyclic ring, together with the metal salt (C), can also crosslink the diene-based rubber (A) in the plural. Here, examples of the heteroatom in the six-membered aromatic heterocyclic ring include nitrogen and phosphorus atoms.

Examples of the six-membered aromatic heterocyclic ring include nitrogen-containing aromatic heterocyclic rings such as pyridine, pyrimidine, pyridazine, pyrazine, triazine, and tetrazine rings, and aromatic heterocyclic rings where the nitrogen in a nitrogen-containing six-membered aromatic heterocyclic ring described above is replaced with phosphorus. Of these, pyridine, pyrimidine, pyridazine, pyrazine, triazine, and tetrazine rings are preferred. A heterocyclic compound having a pyridine, pyrimidine, pyridazine, pyrazine, triazine, or tetrazine ring is highly reactive with the diene-based rubber (A) and, in combination with the metal salt (C), tends to readily form crosslinking through coordination bonds.

Here, the heterocyclic compound (B) preferably has a triazine ring or a tetrazine ring. A heterocyclic compound having a triazine ring or a tetrazine ring is further highly reactive with the diene-based rubber (A) and, in combination with the metal salt (C), further tends to readily form crosslinking through coordination bonds.

In addition, it is preferred that a pyridyl group or a pyrimidinyl group is bonded to the triazine ring or the tetrazine ring of the compound having the triazine ring or the tetrazine ring, and it is further preferred that two pyridyl or pyrimidinyl groups are bonded. When a pyridyl group or a pyrimidinyl group is bonded to the triazine ring or the tetrazine ring, the heterocyclic compound (B) and the metal salt (C) tend to be complexed more readily, and the bond dissociation energy tends to be increased, enabling the formation of stronger crosslinked structures. Furthermore, when two pyridyl or pyrimidinyl groups are bonded to the triazine ring or the tetrazine ring, the heterocyclic compound (B) and the metal salt (C) tend to be complexed even more readily, and the bond dissociation energy tends to be further increased, enabling the formation of even stronger crosslinked structures.

Note that the pyridyl group may be a 2-pyridyl group, a 3-pyridyl group, or a 4-pyridyl group, but a 2-pyridyl group is preferred. Also, the pyrimidinyl group may be a 2-pyrimidinyl group, a 4-pyrimidinyl group, or a 5-pyrimidinyl group.

The heterocyclic compound (B) is further preferably represented by the following general formula (1): 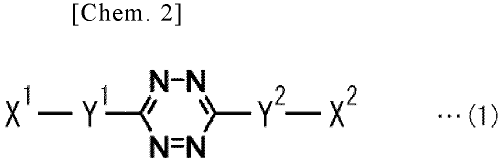 in the formula, X¹ and X² are each independently a pyridyl group or a pyrimidinyl group, and Y¹ and Y² are each independently a single bond or a divalent hydrocarbon group. The compound represented by the general formula (1) readily undergoes a Diels-Alder reaction with the diene-based rubber (A) and, in combination with the metal salt (C), further tends to readily form crosslinking through coordination bonds. In addition, the compound represented by the general formula (1) and the metal salt (C) particularly tend to complex readily, and the bond dissociation energy tends to be particularly increased, enabling the formation of even stronger crosslinked structures.

In the above general formula (1), X¹ and X² are each independently a pyridyl group or a pyrimidinyl group. From the viewpoint of ease of synthesis, X¹ and X² are preferably pyridyl groups. The pyridyl group may be a 2-pyridyl group, a 3-pyridyl group, or a 4-pyridyl group, but a 2-pyridyl group is preferred. The pyrimidinyl group may be a 2-pyrimidinyl group, a 4-pyrimidinyl group, or a 5-pyrimidinyl group.

In the above general formula (1), Y¹ and Y² are each independently a single bond or a divalent hydrocarbon group. Here, examples of the divalent hydrocarbon group include alkylene, alkenylene, and arylene groups. More specifically, examples of alkylene groups include methylene, ethylene, trimethylene, and tetramethylene groups. Examples of alkenylene groups include vinylene, propenylene, and butenylene groups. Examples of arylene groups include phenylene, tolylene, and naphthylene groups. From the viewpoint of ease of synthesis, Y¹ and Y² are preferably single bonds (i.e., X¹ and X² are preferably directly bonded to the tetrazine ring).

Here, it is preferred that X¹ and X² in the above general formula (1) are pyridyl groups, and Y¹ and Y² are single bonds. In this case, the compound of the formula (1) is easily available, and it also particularly tends to complex readily with the metal salt (C) and the bond dissociation energy particularly tends to be high, enabling the formation of even stronger crosslinked structures.

Examples of the compound represented by the above general formula (1) include 3,6-di(2-pyridyl)-1,2,4,5-tetrazine, 3,6-di(3-pyridyl)-1,2,4,5-tetrazine, 3,6-di(4-pyridyl)-1,2,4,5-tetrazine, 3,6-di(2-pyridylmethyl)-1,2,4,5-tetrazine, 3,6-di(2-pyridylethyl)-1,2,4,5-tetrazine, 3-(2-pyridylmethyl)-6-(2-pyridylethyl)-1,2,4,5-tetrazine, 3,6-di(2-pyrimidinyl)-1,2,4,5-tetrazine, 3,6-di(4-pyrimidinyl)-1,2,4,5-tetrazine, and 3,6-di(5-pyrimidinyl)-1,2,4,5-tetrazine. Of these, 3,6-di(2-pyridyl)-1,2,4,5-tetrazine is preferred.

The content of the heterocyclic compound (B) in the rubber composition is preferably 0.1 parts by mass or more, more preferably 0.2 parts by mass or more, and is preferably 10 parts by mass or less, more preferably 5.0 parts by mass or less, per 100 parts by mass of the diene-based rubber (A). When the content of the heterocyclic compound (B) is 0.1 parts by mass or more per 100 parts by mass of the diene-based rubber (A), the crosslinking via coordination bonds increases, and in the high-strain region, the crosslinking via coordination bonds cleaves and energy dissipation through sacrificial bond breaking further improves the breaking resistance of the rubber composition. In addition, when the content of the heterocyclic compound (B) is 10 parts by mass or less per 100 parts by mass of the diene-based rubber (A), a crosslinked rubber with sufficient elastomeric properties becomes more likely to be obtained.

It is preferable that the diene-based rubber (A) is modified with the heterocyclic compound (B). When the diene-based rubber (A) is modified with the heterocyclic compound (B), the multiple main chains of the diene-based rubber (A) can be crosslinked simply by causing multiple heterocyclic compound (B) portions to complex with the metal salt (C), which is described below, to form coordination bonds. Here, the modification of the diene-based rubber (A) by the heterocyclic compound (B) may be achieved at the blending stage of the rubber composition. Alternatively, the diene-based rubber (A) may be modified with the heterocyclic compound (B) in advance prior to blending the rubber composition, and the diene-based rubber (A) modified with the heterocyclic compound (B) may be blended with the metal salt (C), etc., at the blending stage of the rubber composition to crosslink the multiple main chains of the diene-based rubber (A).

When the diene-based rubber (A) is modified with the heterocyclic compound (B), the heterocyclic compound (B) is bonded to the monomer units in the diene-based rubber (A) in an amount of preferably 0.01 to 10 mol%, more preferably 0.02 to 8 mol%, even more preferably 0.03 to 5 mol%, and particularly preferably 0.03 to 3 mol%. When the heterocyclic compound (B) is bonded to the monomer units in the diene-based rubber (A) in an amount of 0.01 mol% or more, the crosslinking via coordination bonds increases, and in the high-strain region, the crosslinking via coordination bonds cleaves and energy dissipation through sacrificial bond breaking further improves the breaking resistance of the rubber composition. Furthermore, when the heterocyclic compound (B) is bonded to the monomer units in the diene-based rubber (A) in an amount of 10 mol% or less, a crosslinked rubber with sufficient elastomeric properties becomes more likely to be obtained.

### --Metal Salt (C)--

The rubber composition of the present disclosure contains a metal salt (C) (excluding metal oxides, metal carbonate salts, and metal salts of fatty acids with 10 or more carbon atoms). The metal salt (C) forms coordination bonds with the heterocyclic compound (B) in the plural, resulting in the crosslinking of the diene-based rubber (A) in the plural. Here, crosslinking through coordination bonds is a reversible crosslinking in which bonding (crosslinking) and dissociations (cleavages) are reversible. It is a crosslinking with a relatively low bond dissociation energy and can be reversibly regenerated even if broken by external stimuli.

Note that the metal salt (C) excludes metal oxides, metal carbonate salts, and metal salts of fatty acids with 10 or more carbon atoms. Metal oxides, metal carbonate salts, and metal salts of fatty acids with 10 or more carbon atoms are less likely to form coordinate bonds (are less likely to complex) with the heterocyclic compound (B) portions added to the diene-based rubber (A) chain. Therefore, by using the metal salt (C) other than these, it is possible to sufficiently form crosslinking through coordination bonds.

Here, examples of metal oxides include zinc oxide, silica, and alumina.

Furthermore, examples of metal carbonate salts include calcium carbonate and the like.

Furthermore, with regard to metal salts of fatty acids with 10 or more carbon atoms, examples of fatty acids with 10 or more carbon atoms include palmitic acid, stearic acid, oleic acid, linoleic acid, and linolenic acid, and examples of metal salts of fatty acids with 10 or more carbon atoms include metal salts such as Zn salts, K salts, Ca salts, Na salts, and Mg salts of the fatty acids listed above.

The metal salt (C) preferably contains at least one metal selected from the group consisting of transition metals and zinc. Metal salts containing transition metals and/or zinc tend to complex readily with the heterocyclic compound (B).

Examples of the transition metal include, for example, elements in Groups 7 to 11 in the periodic table.

Specifically, examples of elements in Group 7 in the periodic table include manganese and rhenium.

Furthermore, examples of elements in Group 8 in the periodic table include iron, ruthenium, and osmium.

Furthermore, examples of elements in Group 9 in the periodic table include cobalt, rhodium, and iridium.

Furthermore, examples of elements in Group 10 in the periodic table include nickel, palladium, and platinum.

Furthermore, examples of elements in Group 11 in the periodic table include copper.

Furthermore, elements in Groups 7 to 11 in the periodic table and zinc tend to bond strongly with the heterocyclic compound (B). Furthermore, when the metal salt (C) contains an element in Group 8 or 11 in the periodic table or zinc, the bond with the heterocyclic compound (B) tends to be even stronger.

With regard to the metal ion in the metal salt (C), the valence of the ion is not particularly limited and can be any valence that each element can take, but preferably the ion is divalent or higher.

It is particularly preferred that the metal salt (C) contains iron, zinc, or copper. Iron, zinc, and copper ions tend to bond particularly strongly with the heterocyclic compound (B) and can form stronger crosslinked structures. Note that the valence of the iron ion is preferably divalent (Fe²⁺) or trivalent (Fe³⁺).

Examples of the metal salt (C) include metal halide salts, metal sulfate salts, metal nitrate salts, metal acrylates, and metal methacrylates. Of these, metal halide salts, metal acrylates, and metal methacrylates are preferred. Metal halide salts, metal acrylates, and metal methacrylates are easy to handle and tend to form bonds readily with the heterocyclic compound (B). Note that the form of the metal salt (C) is not particularly limited and may be, for example, a hydrate.

In addition, examples of the metal halide salts include metal fluoride salts, metal chloride salts, metal bromide salts, and metal iodide salts. Of these, metal chloride salts are preferred. Metal chloride salts are easy to handle and tend to form bonds further readily with the heterocyclic compound (B).

Specifically, examples of the metal salt (C) include FeCl₂, FeCl₂·4H₂O, FeCl₃, FeCl₃-6H₂O, ZnCl₂, CuCl, CuCl₂, CuBr, zinc diacrylate, and zinc dimethacrylate. One metal salt (C) may be used alone or two or more of these may be used in combination.

The content of the metal salt (C) is preferably in the range of 0.1 to 30 parts by mass, more preferably in the range of 0.1 to 15 parts by mass, even more preferably in the range of 0.1 to 10 parts by mass, and particularly preferably in the range of 0.1 to 5 parts by mass, per 100 parts by mass of the diene-based rubber (A). When the content of the metal salt (C) is 0.1 parts by mass or more per 100 parts by mass of the diene-based rubber (A), the crosslinking via coordination bonds increases, and in the high-strain region, the crosslinking via coordination bonds cleaves and energy dissipation through sacrificial bond breaking further improves the breaking resistance of the rubber composition. In addition, when the content of the metal salt (C) is 30 parts by mass or less per 100 parts by mass of the diene-based rubber (A), a crosslinked rubber with sufficient elastomeric properties becomes more likely to be obtained.

In the rubber composition of the present disclosure, the bond dissociation energy between the metal salt (C) and the heterocyclic compound (B) is preferably 100 kJ/mol or more, more preferably 200 kJ/mol or more, and even more preferably 240 kJ/mol or more, and is preferably 500 kJ/mol or less. When the bond dissociation energy is 100 kJ/mol or more, the crosslinking through coordination bonds has sufficient strength in the low-strain region. Furthermore, when the bond dissociation energy is 500 kJ/mol or less, the crosslinking through coordination bonds between the metal salt (C) and the heterocyclic compound (B) becomes more prone to cleave in the high-strain region. This energy dissipation due to the cleavage of crosslinking can further enhance the breaking resistance of the rubber composition.

Here, in the present disclosure, the bond dissociation energy between the metal salt (C) and the heterocyclic compound (B) is a value calculated in the M06/6-31G(d,p)//B3PW91-D3/6-31G(d,p) level or the M06/6 -31G(d,p) level in vacuum, and is a calculated value in the structure in which the heterocyclic compound (B) is bonded to the diene-based rubber (A). It is considered that the metal salt (C) and the heterocyclic compound (B) form ionic aggregates. Gaussian 09 or GRRM 14 can be used to calculate the bond dissociation energy.

For example, crosslinking through coordination bonds can be formed by mixing (kneading) the diene-based rubber (A), the heterocyclic compound (B), and the metal salt (C). Here, conditions in kneading such as temperature and time are preferably selected according to the types and reactivities of the diene-based rubber (A), the heterocyclic compound (B), and the metal salt (C) to be used.

As an example, the reaction scheme of the modification of the diene-based rubber (A) and the coordination bond crosslinking (complexation) of the modified diene-based rubber when 3,6-di(2-pyridyl)-1,2,4,5-tetrazine is used as the heterocyclic compound (B) and zinc chloride (ZnCl₂) is used as the metal salt (C) is described below. Note that the structure of the modified diene-based rubber described herein is one example of a possible structure and this is not limiting.

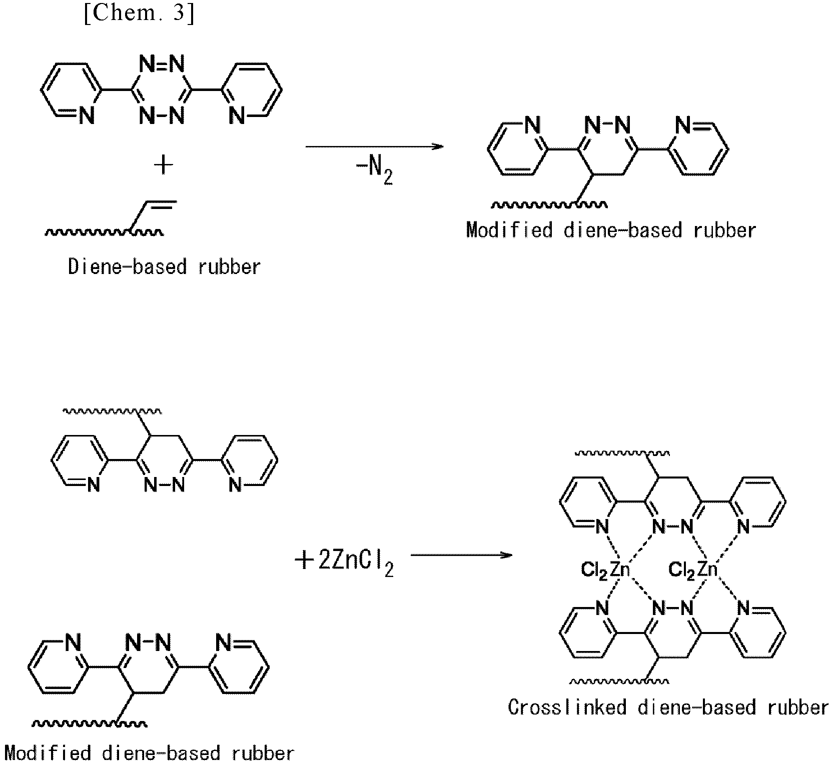

As described in the upper part of the above reaction scheme, in one embodiment of the present disclosure, a modified diene-based rubber is formed by a Diels-Alder reaction of the diene-based rubber (A) with the heterocyclic compound (B). In the present embodiment, nitrogen is eliminated during the Diels-Alder reaction, but any other reactions may be used for the modification reaction.

Furthermore, as described in the lower part of the above reaction scheme, in one embodiment of the present disclosure, the complexation of the modified diene-based rubber and the metal salt (C) produces diene-based rubber crosslinked through coordination bonds (complexed diene-based rubber). Although it is depicted in the above reaction scheme that the nitrogen atoms in the tetrazine residue, the nitrogen atoms in the pyridyl group bonded to the tetrazine residue, and zinc ions form complexes, diene-based rubber crosslinked through coordination bonds may take various crosslinking modes.

### --Organic peroxide (D)--

The rubber composition of the present disclosure contains an organic peroxide (D). When the rubber composition contains the organic peroxide (D) together with the metal salt (C), the rubber composition after crosslinking will have crosslinking through coordination bonds by the metal salt (C) and crosslinked structures (such as C-C bonds) due to the organic peroxide (D) (dual cross linking: DCL). The crosslinked structures (such as C-C bonds) due to the organic peroxide (D) are resistant to cleavage even when heated and undergo minimal morphological changes due to heat, contributing to an improvement in the thermal degradation resistance of the rubber composition. On the other hand, under strain (particularly in the high-strain region), energy dissipation caused by cleavages of crosslinking through coordination bonds improves the breaking resistance.

Examples of the organic peroxide (D) include, but are not particularly limited to, tert-butyl hydroperoxide, 1,1,3,3-tetramethylbutyl hydroperoxide, cumene hydroperoxide, p-menthane hydroperoxide, diisopropyl benzene hydroperoxide, dicumyl peroxide, di-tert-butyl peroxide, di-tert-hexyl peroxide, diisopropyl benzene hydroperoxide, tert-butyl cumyl peroxide, di(2-tert-butylperoxyisopropyl) benzene, 2,5-dimethyl-2,5-di(tert-butylperoxy) hexane, peroxybenzoic acid, benzoyl peroxide, 1,1-bis(1,1-dimethylethylperoxy) cyclohexane, 1,1-bis(tert-butylperoxy) cyclohexane, 1,1-bis(tert-butylperoxy)-3,3,5-trimethylcyclohexane, 1,1-bis(tert-hexylperoxy)-3,3,5-trimethylcyclohexane, 1,1-bis(tert-hexylperoxy) cyclohexane, 2,2-bis(4,4-di-(tert-butylperoxy)cyclohexyl) propane, n-butyl-4,4-di-(tert-butylperoxy) valerate, tert-butylperoxy laurate, tert-butylperoxy-2-ethylhexanoate, 1,1,3,3-tetramethylbutylperoxy-2-ethylhexanoate, tert-hexylperoxy-2-ethylhexanoate, tert-butylperoxy-2-ethylhexanoate, tert-butyl peroxyacetate, cyclohexanone peroxide, acetylacetone peroxide, diisopropyl peroxydicarbonate, and di(4-tert-butylcyclohexyl) peroxydicarbonate. Of these, dicumyl peroxide (DCP) is preferred as the organic peroxide (D). These organic peroxides (D) may be used alone or in combination of two or more.

The content of the organic peroxide (D) in the rubber composition is preferably 0.1 parts by mass or more, more preferably 0.3 parts by mass or more, and even more preferably 0.5 parts by mass or more, and is preferably 30 parts by mass or less, more preferably 20 parts by mass or less, and even more preferably 10 parts by mass or less, per 100 parts by mass of the diene-based rubber (A). When the content of the organic peroxide (D) is 0.1 parts by mass or more per 100 parts by mass of the diene-based rubber (A), the network density of the crosslinked structure due to the organic peroxide (D) is improved and the thermal degradation resistance is further enhanced. In addition, when the content of the organic peroxide (D) is 30 parts by mass or less per 100 parts by mass of the diene-based rubber (A), a crosslinked rubber with sufficient elastomeric properties becomes more likely to be obtained.

Here, the mass ratio (D/C) of the organic peroxide (D) to the metal salt (C) is 0.1 to 10. When the mass ratio (D/C) of the organic peroxide (D) to the metal salt (C) is within the range of 0.1 to 10, the rubber composition will have a better balance between the thermal degradation resistance and breaking resistance. From the viewpoint of the balance between the thermal degradation resistance and breaking resistance of the rubber composition, the mass ratio (D/C) of the organic peroxide (D) to the metal salt (C) is more preferably in the range of 0.1 to 8, and even more preferably in the range of 0.1 to 6.

### --Carbon Black (E)--

The rubber composition of the present disclosure contains a carbon black (E). The inclusion of the carbon black (E) in the rubber composition improves the reinforcing properties of the rubber composition and further enhances the breaking resistance.

Examples of the carbon black (E) include carbon black of GPF, FEF, HAF, ISAF, and SAF grades. The above-listed carbon black (E) may be used alone or in combination of two or more.

The content of the carbon black (E) in the rubber composition is preferably 2 parts by mass or more, more preferably 5 parts by mass or more, and is preferably 100 parts by mass or less, more preferably 90 parts by mass or less, per 100 parts by mass of the diene-based rubber (A). When the content of the carbon black (E) is 2 parts by mass or more per 100 parts by mass of the diene-based rubber (A), the reinforcing property of the rubber composition is further improved and the breaking resistance is even further enhanced. Furthermore, when the content of the carbon black (E) is 100 parts by mass or less per 100 parts by mass of the diene-based rubber (A), the workability in kneading of the rubber composition is further enhanced.

### --Zinc Oxide (F)--

The rubber composition of the present disclosure preferably further contains a zinc oxide (F). By including the zinc oxide (F) in the rubber composition, the mechanical properties of the rubber composition are improved. Additionally, the inclusion of the zinc oxide (F) in the rubber composition enhances the conductivity of the rubber composition, making it less likely for static electricity to accumulate during the manufacturing process. Furthermore, the inclusion of the zinc oxide (F) in the rubber composition makes the rubber composition less prone to sticking.

The content of the zinc oxide (F) in the rubber composition is preferably 0.1 parts by mass or more, more preferably 0.5 parts by mass or more, and is preferably 30 parts by mass or less, more preferably 10 parts by mass or less, per 100 parts by mass of the diene-based rubber (A). When the content of the zinc oxide (F) is in the range of 0.1 parts by mass or more and 30 parts by mass or less per 100 parts by mass of the diene-based rubber (A), the mechanical properties and conductivity of the rubber composition are further improved and the rubber composition becomes even less prone to sticking.

Note that the mass ratio (F/C) of the zinc oxide (F) to the metal salt (C) is preferably in the range of 0.1 to 50, and more preferably in the range of 1 to 20.

### --Silica (G)--

The rubber composition of the present disclosure preferably further contains a silica (G). The inclusion of the silica (G) in the rubber composition improves the reinforcing properties of the rubber composition and further enhances the breaking resistance.

Examples of the silica (G) include wet silica (hydrous silicate), dry silica (anhydrous silicate), calcium silicate, and aluminum silicate. The above-listed silica (G) may be used alone or in combination of two or more.

The content of the silica (G) in the rubber composition is preferably 2 parts by mass or more, 5 parts by mass or more, and is preferably 100 parts by mass or less, more preferably 90 parts by mass or less, per 100 parts by mass of the diene-based rubber (A). When the content of the silica (G) is 2 parts by mass or more per 100 parts by mass of the diene-based rubber (A), the reinforcing property of the rubber composition is further improved and the breaking resistance is even further enhanced. Furthermore, when the content of the silica (G) is 100 parts by mass or less per 100 parts by mass of the diene-based rubber (A), the workability in kneading of the rubber composition is further enhanced.

Note that the mass ratio (E/G) of the carbon black (E) to the silica (G) is preferably in the range of 0.02 to 50, and more preferably in the range of 0.05 to 20.

### --Others--

In addition to the above-described diene-based rubber (A), the heterocyclic compound (B), the metal salt (C), the organic peroxide (D), the carbon black (E), the zinc oxide (F), and the silica (G), the rubber composition of the present disclosure may contain other compounding agents commonly used in the rubber industry. Examples thereof may include softening agents, stearic acid, antioxidants, waxes, silane coupling agents, and vulcanization accelerators, selected as appropriate within the range not hindering the objects of the present disclosure. Commercial products are suitable for use as these compounding agents.

Examples of the antioxidants include N-(1,3-dimethylbutyl)-N'-phenyl-p-phenylenediamine (6PPD), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The amount of the antioxidants is not particularly limited and is preferably in the range of 0.1 to 5 parts by mass, more preferably 0.5 to 4 parts by mass, per 100 parts by mass of the diene-based rubber (A).

Examples of the waxes include paraffin wax and microcrystalline wax. The amount of the waxes is not particularly limited and is preferably in the range of 0.1 to 5 parts by mass, more preferably 1 to 4 parts by mass, per 100 parts by mass of the diene-based rubber (A).

### --Method of Manufacturing Rubber Composition--

The method of manufacturing the rubber composition is not particularly limited, but the rubber composition can be manufactured, for example, by blending the diene-based rubber (A), the heterocyclic compound (B), the metal salt (C), the organic peroxide (D), and the carbon black (E) mentioned above with various ingredients selected as needed, and then kneading, warming, extruding, etc.

There are no particular limitations on the kneading conditions, and various conditions, such as the volume charged into the kneading apparatus, the rotor rotation speed, the ram pressure, the kneading temperature, the kneading time, and the type of the kneading apparatus, may be appropriately selected depending on the purpose. Examples of the kneading apparatus include Banbury mixers, intermixes, kneaders, rolls, and other apparatuses, that are generally used for kneading rubber compositions.

There are also no particular limitations on the conditions of warming, and various conditions such as warming temperature, warming time, and warming apparatus can be appropriately selected depending on the purpose. Examples of the warming apparatus include a warming roller machine and other apparatuses generally used for warming rubber compositions.

There are also no particular limitations on the conditions of extrusion, and various conditions such as extrusion time, extrusion speed, extrusion apparatus, and extrusion temperature can be appropriately selected depending on the purpose. Examples of the extrusion apparatus include an extruder and other apparatuses generally used for extruding rubber compositions. The extrusion temperature can be determined as appropriate.

For example, in the first stage of kneading, the diene-based rubber (A), the heterocyclic compound (B), and the carbon black (E), along with various ingredients selected as necessary, are blended and kneaded to produce a mixture containing a modified diene-based rubber where the heterocyclic compound (B) is bonded to the diene-based rubber (A). Then, in the second or later stage of kneading, the metal salt (C), the organic peroxide (D), and various ingredients selected as necessary are blended and kneaded to cause the diene-based rubber (A) modified with the heterocyclic compound (B) to complex, thereby forming crosslinked structures through coordination bonds while also forming crosslinked structures (such as C-C bonds) due to the organic peroxide (D). Such a method of manufacturing a rubber composition has excellent productivity because crosslinked structures through coordination bonds and crosslinked structures (such as C-C bonds) due to the organic peroxide (D) can be formed during the manufacturing of the rubber composition (during kneading of the rubber composition).

Alternatively, a modified diene-based rubber where the heterocyclic compound (B) is bonded to the diene-based rubber (A) may be prepared in advance. In the first stage of kneading, this pre-prepared modified diene-based rubber is blended with the carbon black (E) and optional compounding agents. Then, in the second or later stage of kneading, the metal salt (C), the organic peroxide (D), and various ingredients selected as necessary are blended and kneaded to cause the diene-based rubber (A) modified with the heterocyclic compound (B) to complex, thereby forming crosslinked structures through coordination bonds while also forming crosslinked structures (such as C-C bonds) due to the organic peroxide (D). This method of manufacturing a rubber composition also allows for the easy formation of crosslinked structures through coordination bonds and crosslinked structures (such as C-C bonds) due to the organic peroxide (D) and also offers excellent productivity.

### <Rubber Product>

The rubber product of the present disclosure is a rubber product selected from the group consisting of a tire, a rubber crawler, and a seismic isolation rubber, and contains the above-described rubber composition.

Since the rubber product of the present disclosure contains the above-described rubber composition, it is excellent in thermal degradation resistance and breaking resistance.

### --Tire--

When the rubber product of the present disclosure is a tire, the applying position of the rubber composition of the present disclosure in the tire is not limited in particular, and may be selected appropriately depending on the purpose. Examples include tread, base tread, sidewall, side-reinforcing rubber, and bead filler, for example,.

The method of producing the tire may be a conventional method. For example, the tire may be produced by successively laminating members that are generally used for the production of tires, such as a carcass layer, a belt layer, and a tread layer, which are composed of the unvulcanized rubber composition and/or cord, on a tire molding drum, withdrawing the drum to obtain a green tire, then heating and vulcanizing the green tire with a conventional method to obtain a desired tire (for example, a pneumatic tire).

### --Rubber Crawler--

When the rubber product of the present disclosure is a rubber crawler, in one embodiment, the rubber crawler has a steel cord, an intermediate rubber layer covering the steel cord, a core disposed on the intermediate rubber layer, and a main rubber layer surrounding the intermediate rubber layer and the core, and further includes a plurality of lugs on the ground side of the main rubber layer. Here, the rubber composition of the present disclosure may be used in any part of the rubber crawler, but it is preferably used in the main body rubber layer, particularly in the lugs, because of its superior crack propagation resistance.

### --Seismic Isolation Rubber--

When the rubber product of the present disclosure is a seismic isolation rubber, in one embodiment, the seismic isolation rubber includes a laminate in which a soft layer and a hard layer are alternately stacked, and a plug inserted into a hollow portion formed at the center of the laminate. In one embodiment, the rubber composition of the present disclosure described above can be used for at least one of the soft layer and the plug.

### EXAMPLES

The present disclosure will be described in more detail below with reference to examples, although the present disclosure is not limited to these examples.

### <Analyses of Diene-based Rubber>

The weight average molecular weight (Mw) of the diene-based rubber is measured using the following method.

### (1) Method for Measuring Weight Average Molecular Weight (Mw)

The weight average molecular weight (Mw) of the diene-based rubber in terms of polystyrene was determined by gel permeation chromatography [GPC: HLC-8321GPC/HT manufactured by Tosoh Corporation, columns: two HT-806M columns manufactured by Showa Denko K. K., detector: differential refractometer (RI)], using monodisperse polystyrene as the standard. Note that the measurement temperature was 40°C.

### <Preparation and Evaluation of Rubber Composition>

Rubber compositions were produced using a generally used Banbury mixer in the formulations listed in Table 1. The thermal degradation resistance and the breaking resistance of the resulting rubber compositions were measured with the following methods.

In addition, the bond dissociation energy between the formulated metal salt (C) and the heterocyclic compound (B) was measured by the following method.

### (2) Evaluation Method for Thermal Degradation Resistance (Rate of Change in Modulus after Thermal Degradation)

In Examples 1 to 2, ring-shaped test pieces were prepared from each rubber composition, and tensile tests were conducted on the test pieces immediately after preparation and test pieces after thermal degradation at 100°C for 48 hours in the air (using a universal tensile machine manufactured by Tensilon under the condition of a tensile speed of 300 mm/min). The value of the modulus of a test piece under a 300% strain immediately after preparation and the value of the modulus of a test piece under a 300% strain after the thermal degradation were used to calculate the rate of change before and after the thermal degradation as an absolute value.

In Comparative Examples 1 to 4, JIS No. 7 test pieces were produced from each rubber composition, and tensile tests were conducted on test pieces immediately after preparation and test pieces after thermal degradation at 100°C for 48 hours in the air (using a universal tensile testing machine manufactured by Instron under the condition of a tensile speed of 200 mm/min). The value of the modulus of a test piece under a 300% strain immediately after preparation and the value of the modulus of a test piece under a 300% strain after the thermal degradation were used to calculate the rate of change before and after the thermal degradation as an absolute value.

Although the testing machines, the shapes of the test pieces, and some measurement conditions differed between the examples and comparative examples, reproducible results were obtained for the rate of change in modulus before and after thermal degradation.

A smaller rate of change before and after thermal degradation indicates better thermal degradation resistance.

### (3) Evaluation Method for Breaking Resistance (Crack Resistance)

A strip-shaped test specimen with a hole drilled in the center was prepared from each rubber composition. Using this test specimen, a dc/dn test was conducted using a "Servopulser" manufactured by Shimadzu Corporation at a frequency of 5 Hz and a temperature of 40°C. The test involved conducting a constant stress test at stress levels of 2 or higher for each formulation. The crack propagation rate was calculated at the time when the value of the common logarithm of the tearing energy [J/m²] at a repetition of 2000 cycles reached 4.0. For the crack propagation rate obtained by the above process, the data were normalized with the reciprocal of the formulation data of each example using the formulation data of Comparative Example 2 as the control (having an index value of 100). A larger index value indicates a lower crack propagation rate and more excellent breaking resistance.

### (4) Calculation Method of Bond Dissociation Energy

The bond dissociation energy between the metal ion in the metal salt (C) (specifically, the metal ion in the metal salt (C)) and the heterocyclic compound (B) (specifically, the functional group in the heterocyclic compound (B)) is a value calculated in the M06/6-31G(d,p)//B3PW91-D3/6-31G(d,p) level or the M06/6-31G(d,p) level in vacuum, and is a calculated value in the structure in which the heterocyclic compound (B) is bonded to the diene-based rubber (A). It is considered that the metal salt (C) and the heterocyclic compound (B) form ionic aggregates. Gaussian 09 or GRRM 14 can be used to calculate the bond dissociation energy. Here, the dissociation energy of the coordination bond between the central metal and the tetrazine derivative is determined under the conditions at the M06/6-31G(d,p) level of theory and in the gas phase.

The bond dissociation energy between the metal salt (C) [zinc chloride] and the heterocyclic compound (B) [3,6-di(2-pyridyl)-1,2,4,5-tetrazine] of the rubber composition produced in Example 1 is 172.0 kJ/mol.

Furthermore, the bond dissociation energy between the metal salt (C) [zinc dimethacrylate] and the heterocyclic compound (B) [3,6-di(2-pyridyl)-1,2,4,5-tetrazine] of the rubber composition produced in Example 2 is 111.9 kJ/mol.

**[Table 1]**

| | | | Comparative Example 1 | Comparative Example 2 | Comparative Example 3 | Comparative Example 4 | Example 1 | Example 2 |
|---|---|---|---|---|---|---|---|---|
| | SBR *1 | | 100 | 100 | 100 | 100 | 100 | 100 |
| | Heterocyclic compound *2 | | - | - | - | - | 2.4 | 2.4 |
| | Carbon black *3 | | 30 | 30 | 30 | 30 | 30 | 30 |
| | Stearic acid *4 | | 2.0 | 2.0 | 2.0 | - | - | - |
| | Antioxidant *5 | | 1.0 | 1.0 | 1.0 | 1.0 | 1.0 | 1.0 |
| | Wax *6 | | 2.0 | 2.0 | 2.0 | 2.0 | 2.0 | 2.0 |
| Formulation | Sulfur *7 | parts by mass | 0.8 | 1.5 | 0.6 | - | - | - |
| | Organic peroxide *8 | | - | - | - | 1.5 | 1.0 | 0.8 |
| | Zinc flower *9 | | 2.5 | 2.5 | 2.5 | - | - | - |
| | Vulcanization accelerator 1 *10 | | 1.6 | 0.8 | 1.6 | - | - | - |
| | Vulcanization accelerator 2 *11 | | - | - | 2.3 | - | - | - |
| | Zinc chloride*12 | | - | - | - | - | 1.4 | - |
| | Zinc dimethacrylate *13 | | - | - | - | - | - | 2.4 |
| Mass ratio of organic peroxide/metal salt | | - | - | - | - | - | 0.71 | 0.33 |
| Evaluation Results | Rate of change in modulus after thermal degradation | % | 47 | 84 | 32 | 2 | 6 | 4 |
| | Crack resistance | Index | 74 | 100 | 27 | 18 | 211 | 1967 |

*1 SBR: styrene-butadiene rubber manufactured by Asahi Kasei Corporation, trade name "TUFDENE 2000R", the weight average molecular weight (Mw) = 363,046
*2 Heterocyclic compound: 3,6-di(2-pyridyl)-1,2,4,5-tetrazine manufactured by Tokyo Chemical Industry Co., Ltd.
*3 Carbon black: ISAF grade, trade name "Asahi #78" manufactured by Asahi Carbon Co., Ltd.
*4 Stearic acid: trade name "Stearic Acid 50s" manufactured by New Japan Chemical Co., Ltd.
*5 Antioxidant: antioxidant 6PPD, N-phenyl-N'-(1,3-dimethylbutyl)-p-phenylenediamine, "Antigen 6C" manufactured by Sumitomo Chemical Co., Ltd.
*6 Wax: trade name "Suntight" manufactured by Seiko Chemical Co., Ltd.
*7 Sulfur: trade name "HK200-5" manufactured by Hosoi Chemical Industry Co., Ltd.
*8 Organic peroxide: dicumyl peroxide (DCP), trade name "PERCUMYL D" manufactured by NOF Corporation
*9 Zinc flower: "No. 2 Zinc Oxide" manufactured by HakusuiTec Co., Ltd.
*10 Vulcanization accelerator 1: trade name "Sanceler CM-G" manufactured by Sanshin Chemical Industry Co., Ltd.
*11 Vulcanization accelerator 2: trade name "NOCCELER TOT-N" manufactured by Ouchi Shinko Chemical Industrial Co., Ltd.
*12 Zinc chloride: ZnCl₂ manufactured by TOKYO CHEMICAL INDUSTRY CO., LTD.
*13 Zinc dimethacrylate: trade name "DYMALINK 708" manufactured by CRAY VALLEY

From Table 1, it can be seen that the rubber compositions of the examples according to the present disclosure were able to achieve both thermal degradation resistance and breaking resistance.

### INDUSTRIAL APPLICABILITY

The rubber composition of the present disclosure can be used in rubber products, such as tires, rubber crawlers, and seismic isolation rubber.

## Claims

1. A rubber composition comprising:
a diene-based rubber (A);
a heterocyclic compound (B) having a six-membered aromatic heterocyclic ring;
a metal salt (C) (excluding metal oxides, metal carbonate salts, and metal salts of fatty acids with 10 or more carbon atoms);
an organic peroxide (D); and
a carbon black (E).

2. The rubber composition according to claim 1, wherein a mass ratio (D/C) of the organic peroxide (D) to the metal salt (C) is 0.1 to 10.

3. The rubber composition according to claim 1 or 2, wherein the heterocyclic compound (B) has at least one heterocyclic ring selected from the group consisting of pyridine, pyrimidine, pyridazine, pyrazine, triazine, and tetrazine rings.

4. The rubber composition according to claim 3, wherein the heterocyclic compound (B) has a triazine ring or a tetrazine ring.

5. The rubber composition according to claim 4, wherein
the heterocyclic compound (B) is represented by the following general formula (1): 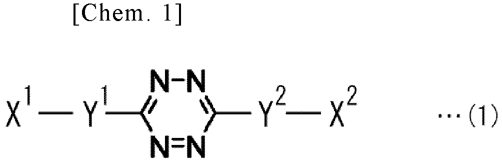 in the formula, X¹ and X² are each independently a pyridyl group or a pyrimidinyl group, and Y¹ and Y² are each independently a single bond or a divalent hydrocarbon group.

6. The rubber composition according to any one of claims 1 to 5, wherein the metal salt (C) comprises at least one metal selected from the group consisting of transition metals and zinc.

7. The rubber composition according to any one of claims 1 to 6, wherein the metal salt (C) is at least one selected from the group consisting of metal halide salts, metal acrylates, and metal methacrylates.

8. The rubber composition according to any one of claims 1 to 7, further comprising a zinc oxide (F).

9. The rubber composition according to any one of claims 1 to 8, further comprising a silica (G).

10. The rubber composition according to any one of claims 1 to 9, wherein the diene-based rubber (A) is modified with the heterocyclic compound (B).

11. The rubber composition according to any one of claims 1 to 10, wherein the diene-based rubber (A) has a weight average molecular weight (Mw) of 10,000 to 3,000,000.

12. The rubber composition according to any one of claims 1 to 11, wherein a bond dissociation energy between the metal salt (C) and the heterocyclic compound (B) is 100 kJ/mol or more.

13. A rubber product selected from the group consisting of a tire, a rubber crawler, and a seismic isolation rubber, comprising
the rubber composition according to any one of claims 1 to 12.
